Europäisches Patentamt

(19) European Patent Office

Office européen des brevets

(11) Publication number: **0 049 973**
**B1**

(12) **EUROPEAN PATENT SPECIFICATION**

(45) Date of publication of patent specification: **14.11.84**

(21) Application number: **81304505.1**

(22) Date of filing: **29.09.81**

(51) Int. Cl.³: **G 03 B 7/16,** G 03 B 7/099,
G 03 B 9/42

(54) **Apparatus for photographic exposure control.**

(30) Priority: **06.10.80 US 193892**

(43) Date of publication of application:
**21.04.82 Bulletin 82/16**

(45) Publication of the grant of the patent:
**14.11.84 Bulletin 84/46**

(84) Designated Contracting States:
**CH DE FR GB LI**

(56) References cited:
**GB-A-2 069 158**
**US-A-4 147 418**

(73) Proprietor: **POLAROID CORPORATION**
**549 Technology Square**
**Cambridge, Massachusetts 02139 (US)**

(72) Inventor: **Johnson, Bruce Kean**
**27 Summer Street**
**Andover Massachusetts (US)**
Inventor: **Whiteside, George d'Arcy**
**4 Robbins Road**
**Lexington Massachusetts (US)**

(74) Representative: **Abbott, Leonard Charles et al**
**GILL JENNINGS & EVERY 53-64 Chancery Lane**
**London WC2A 1HN (GB)**

Courier Press, Leamington Spa, England.

## Description

This invention relates generally to the field of photography and, more particularly, an improved apparatus for controlling photoresponsiveness of exposure control systems during exposure.

Automatic light responsive exposure control systems are well known in the photographic arts. One such automatic exposure control system employs scanning type shutter blades. Exemplary scanning shutter blades usable in such systems are disclosed generally in US—A—3 942 183 and 4 104 653. As described in these patents, co-operating pairs of taking or primary, and secondary or photocell apertures are formed in the shutter blades. These pairs of apertures co-operate respectively for blocking and unblocking the passage of light through an exposure opening to a film plane, and through a photocell opening to a light sensing or photoresponsive cell used for controlling blade positioning. During the exposure cycle, the photocell apertures operate in conjunction with the photocell and a control circuit to define both the taking aperture values achieved and the exposure interval as a function of the amount of scene radiation received through the photocell apertures.

For optimising photographic quality when using systems of the type noted, a spectral correction filter can be employed in the photocell's optical path. Such filter correlates the spectral sensitivity curve of the photoresponsive element more closely with that of the eye. Without such a filter, it will be understood that the typical photocell would react to spectral frequencies, such as infrared (IR), so as to cause the control circuit to terminate an exposure interval earlier than desired. This is especially the case when the photocell is of the silicon type, because such a photocell tends to be red (IR) sensitive. Ordinarily then, use is made of a spectral correction filter having peak absorption in the near infrared region and high transmission in the visual region.

While use of an infrared spectral filter serves satisfactorily, complications can arise with its usage particularly in flash exposures when reflectivities of different objects in photographic scenes exhibit widely disparate values. Partly as a result of this, it has been found advantageous to remove the infrared filter in flash exposure modes. Removal of this filter during flash firing does not, however, eliminate entirely the effect of the disparate visible reflectivity values.

It has been known to provide a fixed proportion of different spectral evaluation for improved exposure by employing a filter having select spectral filtering capabilities. While this approach can provide improvement in exposure, the manufacture of such filters is an expensive and time-consuming process requiring the maintenance of high standards for achieving consistent quality.

It has been proposed to use a spectral filter which, during a flash portion of the exposure interval in which the contribution of scene light provided by the flash is important, blocks the visible frequencies, while exclusively passing the infrared frequencies. It has been found that with this arrangement, the disparate visible light reflectivity values giving rise to inaccurate evaluations of scene brightness during a flash firing are substantially reduced.

We have proposed in GB—A—2 069 158, published 19.08.81 an exposure control system with artificial flash lighting employing a pair of photoresponsive regions having a blocking visible spectral filter for the strobe mode and a blocking infrared spectral filter in the ambient mode. In this system, the shutter mechanism is provided with a photocell aperture arrangement which, during shutter scanning, alternatively directs scene radiation to one or the other photoresponsive regions depending on the ambient light conditions.

This approach represents a significant advance in providing improved exposure under many different lighting conditions. However, even this approach has potential for less than satisfactory results in certain, relatively uncommon, scene lighting situations. For example, difficulties can arise under low ambient conditions in scenes having a relatively high amount of infrared radiation, such as produced by green plants, since the blocking visible filter is overlying the photocell during a significant amount of the exposure such that the cell exclusively receives infrared frequencies. As a result, a likelihood for underexposure exists.

This is due, in part, to the fact that with such scanning shutter systems the blocking visible filter is controlling passage of scene radiation to the photocell for a significant portion of the time the photocell circuit is integrating the scene radiation. Hence, when only infrared is being passed to the photocell, as when the blocking visible/passing infrared filter is controlling, the photocell response for terminating exposure will be accentuated due to the infrared of the green plants.

It should be mentioned that in the last-noted control system, as the photocell aperture arrangement was shifted from visible to infrared evaluation, it integrated for a short time both visible frequencies and infrared frequencies. This occurred, for example, during transition of the blocking infrared filter to the blocking visible filter over the photocell. Such integration of both frequencies was considered undesirable. Also, the actual duration of this simultaneous integration in such system is negligible in terms of time and thus in terms affecting exposure. Thus, the degree of this dual integration of both visible and infrared frequencies was intended to be and was in fact minimised as much as possible.

An object of this invention is to provide a method and apparatus for improving exposure control. Towards this end, preselected amounts of different scene radiation frequencies are generally simultaneously evaluated for controlling exposure.

The invention consists in photographic apparatus for use in ambient and artificial scene illumination, comprising an exposure control device including; a shutter mechanism including a blade member movable to open and close an exposure aperture and to define an exposure interval; radiation-responsive means for generating a shutter control signal as a function of radiation from the scene, including evaluating means for substantially attenuating the passage of infra-red and passing visible frequencies to a radiation-responsive element in ambient illumination and for passing infrared frequencies to the radiation-responsive element in an artificial illumination; and means responsive to the control signal for moving the blade member to close the exposure aperture and terminate the exposure interval, characterized in that the evaluating means includes means operating when artificial scene illumination is required to pass a reduced amount of visible frequencies which, together with the infra-red frequencies, impinge on the radiation-responsive element during the artificial illumination.

The amount of the visible spectral frequencies being evaluated during the period of artificial illumination can vary depending upon the type of control desired, but in any event is greater than a negligible amount of scene radiation being evaluated during the period.

In the preferred form of apparatus, the evaluating means includes means movable relative to the radiation-responsive means and comprising first and second aperture means mounted for simultaneous movement with the blade member, the first aperture means co-operating with a first filter means to block infrared and to pass visible frequencies to control radiation impinging on the radiation-responsive means in ambient illumination, and the second aperture means co-operating with a second filter means to pass infrared frequencies and reduced amounts of visible frequencies to the radiation-responsive element during a subsequent portion of the exposure interval which is reached only if artificial illumination is required. Thus, the shutter mechanism may comprise a pair of aperture blades which move together to define a primary aperture for the passage of scene radiation to the focal plane and different sets of secondary apertures for the passage of infrared and visible spectral frequencies from the scene to the radiation-sensitive means at different times in the movement of the blades. Stationary filters may be placed in the paths of light beams passing through these secondary apertures; if desired, the filter element passing the infrared frequencies can be arranged also to pass the required reduced proportion of visible spectral frequencies. Alternatively, the secondary apertures formed in the blades may be provided with the required filters, or with filters covering a portion of their areas.

In order that the invention may be better understood, several embodiments of the invention are described below with reference to the accompanying drawings, wherein:

Figure 1 is a diagrammatic frontal view in elevation depicting photographic apparatus according to a first embodiment of this invention, including an improved photocell aperture arrangement;

Figure 2 is a diagrammatic frontal view in elevation showing scanning shutter blades and the improved photocell aperture arrangement of Figure 1 in one operative position;

Figure 3 is a view similar to Figure 2, but showing the photocell aperture arrangement in yet another operative position;

Figure 4 is an exploded perspective view showing an enlarged split photocell arrangement;

Figure 5 is a graphical representation showing the variation of taking and photocell aperture areas as a function of shutter blade scanning time according to a preferred embodiments of the invention; and,

Figure 6 is a schematic representation of a second embodiment of this invention.

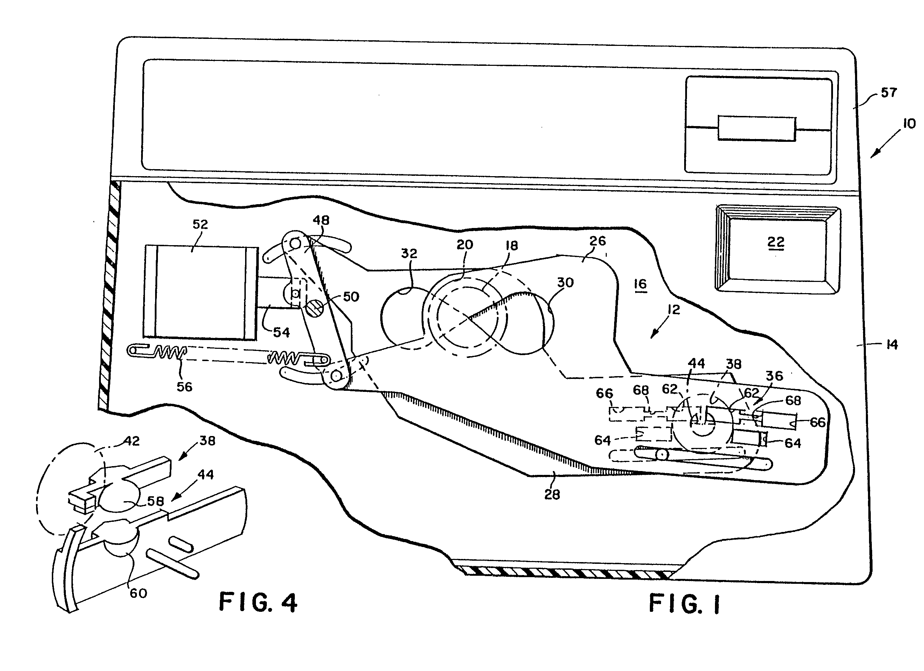

Figure 1 illustrates a photographic camera apparatus 10 of the self-developing kind having an improved exposure control system 12. Stationarily affixed in and to a camera housing 14 is a base block casting 16. Centrally formed in the casting 16 is a light exposure opening 18 constructed for defining the maximum available exposure aperture of the system 12, as well as for allowing scene radiation to reach an image recordable photographic film unit (not shown) of a film pack (not shown). Examples of film packs containing multiple film units of the self-developing type usable in a camera of the kind indicated above are described in US—A— 3 543 662, 3 075 542, 3 748 984 and 3 779 770. These film packs are of the kind manufactured and sold by the Polaroid Corporation, Cambridge, Massachusetts. Each of the film units of the film pack is successively positioned at the focal plane (not shown) of the camera 10.

Connected to and supported by a front wall of the camera housing 14 in overlying relationship to the light exposure opening 18 is a variable focal objective lens assembly or arrangement 20. The lens arrangement 20 permits image carrying rays passing therethrough to be reflected from a mirror (not shown) housed in the camera housing 14 to the uppermost one of the film units in the film pack located at a focal plane. Also, this invention envisions use of a fixed focus lens assembly instead of a variable focal lens assembly.

Connected to the front face of the camera housing 14 is a viewing window 22 which, in conjunction with the camera viewing system (not shown), permits viewing and framing of a subject to be photographed.

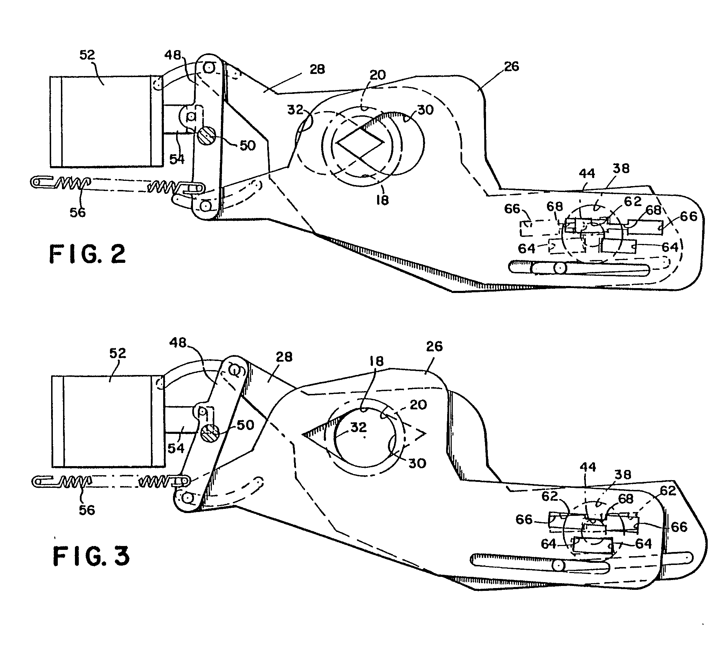

Continued reference is made to Figure 1 along with Figures 2 to 4 for better depicting the improved exposure control system 12. Included in the system 12 is a blade mechanism comprising a pair of scanning shutter type blades 26 and 28. Since the blade mechanism does not, per se, form an aspect of the present invention, only a description of its construction and operation necessary for a complete understanding of the present invention will be given. Reference is, however, made to commonly assigned US—A—4 040 072 for a more complete description of such a blade mechanism. The shutter blades 26, 28 are supported for scanning type reciprocatory movement on and by the base block casting 16 so as to be positioned intermediate the lens arrangement 20 and the light exposure opening 18.

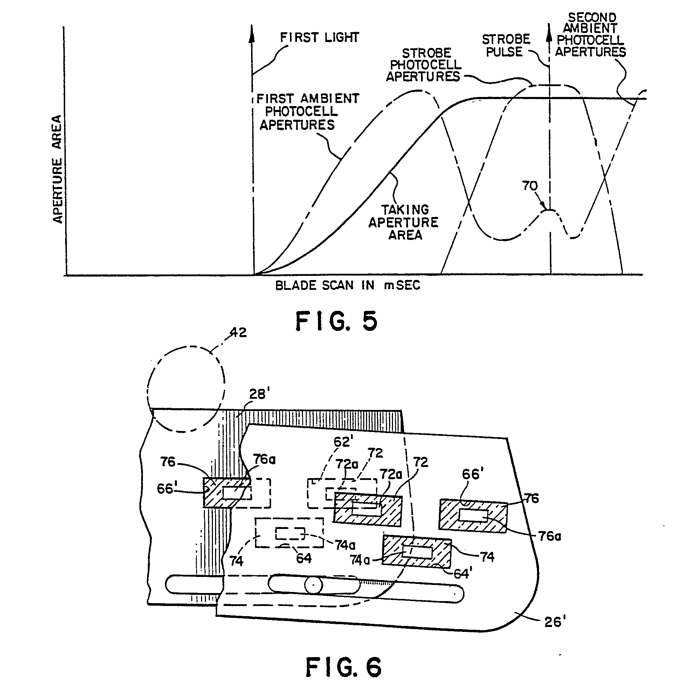

Formed in the scanning shutter blades 26, 28 is a pair of taking or scene light admitting primary apertures 30, 32 respectively. During blade scanning movement, the taking apertures 30, 32 coincide in overlapping relationship with respect to both the light exposure opening 18 and the lens arrangement 20 to define progressively increasing taking aperture areas as a function of blade positioning. In this embodiment, the taking apertures 30, 32 define a time-variable taking exposure aperture area which is indicated by the taking aperture curve in Figure 5. Basically, the foregoing provides means for controlling transmission of scene radiation along an optical path to the focal plane as to define an exposure interval during a scene radiation evaluating period.

Also formed in the shutter blades 26, 28 is a set of corresponding pairs of secondary or photocell sweep apertures indicated generally by reference numeral 36. Basically, the corresponding and overlapping set of photocell apertures 36 define a plurality of small, effective photocell aperture areas for controlling the passage of scene radiation along separate respective paths to a light detecting station shown generally at 38. The photocell aperture set 36 provides evaluating aperture means for controlling passage of scene radiation to the light detecting station 38 responsive to the displacement of the shutter blades 26, 28.

The light detecting station 38 includes a photocell assembly of the silicon photodiode type having a photocell detector 42 (Figure 4) and a lens assembly 44. The photodetector 42 co-operates with a light integrating circuit (not shown), in a well known manner, for energising a solenoid 52 for terminating the exposure interval of the shutter blades 26, 28 as a function of the time integration of scene radiation intensity incident on the photodetector 42. The amount and character of scene radiation incident on the photodetector 42 are controlled by the photocell sweep apertures 36 and the photocell lens assembly 44. The foregoing provides means for evaluating scene radiation.

Distal ends of the shutter blades 26, 28 are pivotally connected to distal ends of a walking beam 48. In turn, the walking beam 48 is pivotally connected to the base block casting 16 by a pivot pin 50. Distal ends of the walking beam 48 have pin members extending through respective circular openings formed in the respective shutter blades 26, 28. These pin members slidably engage respective arcuate slots formed in the base block casting 16 for prohibiting shutter blade disengagement.

Displacement of the shutter blades 26, 28 is provided, in part, by the solenoid 52. Included in the solenoid 52 is an internally arranged and movable plunger unit 54. This plunger unit 54 is affixed to the walking beam 48 by means of a pivot pin or stud. Longitudinal displacement of the plunger unit 54 is effective for rotating the walking beam 48 about the pivot pin 50. Solenoid energisation retracts the plunger unit 54 into the solenoid housing, thereby driving the shutter blades 26, 28 to a scene light blocking condition (Figure 1); whereby the taking apertures 30, 32 do not overlap or coincide. Biasing spring 56 normally serves to force the plunger unit 54 outwardly from the solenoid housing so as to tend to rotate the walking beam 48 in a counterclockwise direction. Such rotation follows solenoid de-energisation. Thus, the biasing spring 56 urges continuously the taking apertures 30, 32 and the set of photocell apertures 36 to positions defining their effective aperture areas, as will be described more fully. Towards this end, one end of the biasing spring 56 is affixed to the casting 16 while its opposite end is attached to the walking beam 48. Of course, re-energisation of the solenoid 52 will overcome the biasing effect of the spring 56 to terminate an exposure cycle or interval. Re-energisation commence in response to the light detecting station integrating a preselected quantity of scene radiation. For a more complete description of the foregoing structure and function, reference is made to the last noted patent. The foregoing provides means for controlling displacement of the shutter blades 26, 28, for defining the exposure interval.

Although this embodiment is described for use with non-reflex type cameras, the intended scope of this invention is, of course, by no means so limited. Thus cameras of the well known reflex type, such as described in US Patent No. 3 672 281, are suitable for embodying in the exposure control system of this invention.

Power for the camera apparatus 10 comes from a battery (not shown) housed in the film pack. For conserving battery power, the solenoid 52 should not be continuously energised for maintaining the shutter blades 26, 28 in their scene light blocking position. Towards this end, a latch mechanism (not shown) is provided. Details regarding the latching mechanism as well as its mode of operation in conjunction with the shutter blade operation do not per se, form an aspect of this invention. Therefore, reference is made to the last noted patent for a more complete description thereof.

The strobe unit 57 and its operation do not, per se, form an aspect of the present invention.

The strobe unit 57 is a quench type fill-in flash unit and has its pulse of illumination of limited maximum duration during the exposure.

As indicated, the integrating circuit of the light detecting station 38 integrates the amount of scene radiation intensity incident upon the photodetector 42 as a function of time. Of course, this occurs as long as the set of photocell apertures 36 and lens assembly 44 are effective in a manner to be described for controlling scene radiation to the photodetector 42.

Referring back to the photocell lens assembly 44 (Figure 4), it directs the scene light onto the photodetector 42, as well as spectrally filters various frequencies of scene light. Included in the lens assembly 44 are upper and lower optical lens elements 58 and 60, respectively. The upper lens elements 58 transmits and directs spectral frequencies in the visible range (e.g. 400—700 nm) to the photodetector 42 while blocking frequencies in the near infrared range or region (e.g. 700—1200 nm). Conversely, the lower lens element 60 transmits exclusively infrared frequencies, but blocks the visible spectrum frequencies.

For exposure control purposes, the upper optical lens element 58, which generally exclusively blocks the infrared frequencies, directs spectrally filtered scene radiation controlled by the photocell apertures 36 to the photodetector 42. The lens element 58 is used predominantly in situations involving moderate-to-high ambient light, wherein the primary aperture values are generally less than maximum. With the scene light being spectrally filtered to block IR, the potential of overexposing blue sky is eliminated. As noted, a flash can be fired during this exposure. Since flash contribution under these levels of ambient light is not controlling in terms of exposure, the lack of precise flash accuracy is tolerated in favour of ambient control.

The lower optical lens element 60, which passes essentially infrared frequencies, directs scene radiation to the photodetector 42. It is used predominantly in situations involving firings of the strobe 57, wherein the level of ambient light is low and accordingly the flash contribution is significant as compared to the ambient.

Under these conditions, the primary effective aperture value established by the taking apertures 30, 32, is at a maximum and infrared spectral frequencies will be evaluated by the photodetector 42. Hence, the relatively more uniform reflectivity values of the infrared frequencies are utilised.

It will be understood that continued blade scanning causes the photocell apertures 36 to co-operate so that the upper optical lens element 58 again becomes effective. Generally, this will occur in situations involving predominantly low ambient light at large subject distances where the effect of flash is negligible. Such conditions can occur during early morning or late evening with a distant photographic subject; for example, under low light conditions when taking pictures of the Grand Canyon, wherein the objects of the scene are too remote to reflect a significant amount of flash intensity. Under such conditions, it is preferred to return to scene evaluation excluding IR radiation. Hence the upper lens element 58 becomes effective for such purposes.

Turning back again to the photocell aperture set 36, reference is made to Figures 1 to 3 and 5 for better illustrating its construction and functional co-operation with the upper and lower optical lens element 58, 60; respectively, for achieving the selective use of such lens elements, as indicated above, and in a manner in accordance with this invention. Each of the shutter blades 26, 28 includes ambient photocell aperture 62, strobe photocell aperture 64, ambient photocell aperture 66, and ambient control photocell aperture 68. The ambient control apertures 68, when overlapping, as shown in Figure 3, provide means for leaking preselected amounts of scene radiation to the photodetector for regulating exposure in a desired manner.

For better understanding the sequencing of the set of photocell apertures 36, reference is initially made to Figure 1, where the shutter blades 26, 28 are shown in the scene light blocking condition wherein the taking apertures 30, 32 are not in overlapping coincidence. When the exposure interval is commenced, the shutter blades 26, 28 are driven, under the influence of the biasing spring 56, so that the taking apertures are in their scene light admitting conditions (Figures 2 and 3).

During the initial portion of shutter blade scan from the scene light blocking condition to a light unblocking condition, the ambient photocell apertures 62 initially progressively cooperate by overlapping. During this overlapping coincidence, they form distinct ambient photocell aperture areas which change as a function of blade scanning. The coinciding ambient apertures 62 are effective for controlling scene radiation passing through the upper lens element 58, along a first path, to the photodetector 42. Hence, visible spectral frequencies will be evaluated by the noted control circuit associated with the photodetector 42. Also, these photocell apertures coincide for a first select portion of the exposure interval. In this regard, reference is made to the first ambient photocell curve (Figure 5) for representing the ambient photocell aperture area defined by the ambient photocell apertures 62. Since the blade scan is terminated early under moderate-to-high scene light levels by the light detecting station 38, spectral filtering of frequencies, such as infrared, is provided for the predominantly ambient exposure.

Under lower ambient light levels, where the flash provides a significant contribution, the infrared frequencies are evaluated by the system. In this regard, continued blade scan results in the ambient photocell apertures gradually passing out of coincidence and the strobe photocell apertures 64, 64 progressively coinciding with each other for a second select portion of the exposure interval. As shown in Figure 5, the apertures 64 form effective strobe photocell aperture areas which change as a function of blade positioning during scanning. The coinciding strobe photocell apertures 64 are effective for permitting scene radiation passing through the lower lens element 60 to travel along a second path to the photodetector 42. While the strobe photocell apertures 64 are operative in the manner described, the ambient photocell apertures 62 close. Thus, passage of scene radiation along the first path is terminated. When the strobe apertures 64 are coinciding, the photodetector 42 will respond to infrared radiation. Reference is made to the curve in Figure 5 for illustrating the aperture area defined by the strobe photocell apertures 64 during scanning. It is apparent that the co-operating pairs of apertures 62, 64 effect, in general, an alternation of the paths the scene radiation takes to the photodetector 42. Moreover, the time duration of the second select portion defined by the coinciding apertures 64 exceeds the duration of the illumination pulse to adequately accommodate the latter. As noted, because the apertures 64 are open for a period exceeding the flash pulse the flash mode will be adversely affected by high amounts of infrared radiation.

The ambient photocell apertures 66 are constructed to overlap with each other during continued shutter blade displacement. This overlap is effective to change the scene radiation path to the photodetector 42 back to the noted first path, whereby the photocell sweep apertures 66 overlap to direct the scene radiation back again to the upper optical lens element 58.

It is pointed out that with the foregoing type of photocell aperture arrangement on scanning blades, the coinciding photocell sweep apertures can generally simultaneously pass scene radiation to the upper and lower optical lens elements 58 and 60, respectively. However, such dual passage of scene radiation is for a negligible portion of the scan, whereby the amount of leakage of the integrated visible frequencies versus the integrated infrared frequencies, when the apertures 64 are overlapping, is also negligible. For example, the leaked visible frequencies can comprise about less than 5 to 7 per cent of the total scene light integrated when the apertures 64 are controlling passage of scene radiation to the photodetector.

In contrast, the present embodiment can fix the proportion of visible frequencies integrated versus the infrared frequencies integrated during that portion of the evaluation period the strobe photocell apertures 64 are overlapping. Towards this end in this embodiment, visible spectral frequencies are being passed by coinciding ambient control apertures 68 (Figure 3). Hence visible spectral frequencies are passed along the first path and are simultaneously sensed by the photodetector 42 while the strobe apertures 64 are coinciding and passing scene radiation along the second path to the photodetector. Thus, the integrating circuit of the light detecting station 38 integrates not only infrared frequencies, but visible as well during this portion of the evaluation period. Such controlled proportioning of the total amount scene radiation integrated during said portion provides desired exposure control in a number of exposure situations. For example, it has been determined that improved exposure control is provided in the flash mode, when the strobe photocell apertures 64 coincide with a scene containing relatively high amounts of infrared; such as green plants. In such situations, the photodetector 42, which without the advantage of this invention would be exclusively responsive to the infrared frequencies, is not exclusively responsive to the infrared frequencies because visible frequencies are also being simultaneously evaluated. Because of such simultaneous evaluation it has been found that the integration of scene radiation is delayed so that the solenoid 52 is re-energised at a later time, as compared to the time which would be taken with exclusive infrared evaluation. Consequently, the exposure is terminated later and the possibility of underexposure, under such scene conditions, is significantly minimised.

In the illustrated embodiment, each ambient photocell aperture 68 extends continuously to and between the ambient photocell apertures 62 and 66. Each ambient photocell aperture 68 has an area considerably less than the area of each of the corresponding ambient photocell apertures 62, 66 as well as the strobe photocell aperture 64.

Reference is made to Figure 5 for demonstrating the varying aperture areas produced by the coincidence of the ambient apertures 68, and this is designated generally by the curve 70.

Based on the foregoing, exposure disadvantages inherent in scenes having high infrared content and intended to be photographed during a strobe mode, with shutter blades and photocell assembly passing substantially exclusive infrared frequencies, are substantially overcome by passing controlled amounts of visible spectral frequencies, through the upper lens 58 along the first path preferably substantially simultaneously and continuously with the strobe photocell apertures 64 passing infrared radiation along the second path.

Although the illustrated embodiment shows the ambient apertures 68 being relatively uniform and continuously arranged between the ambient photocell apertures 62 and 66, it will be appreciated that the ambient apertures 68 can have other configurations and dimensions. Also, they do not have to extend continuously between the apertures 62 and 66.

It will be appreciated that the proportion of scene radiation integrated by scene radiation passing through lens element 58 as compared to that integrated by the scene radiation passing through lens element 60 can vary depending upon the exposure control desired.

It should be appreciated that leaking aperture arrangements other than the one illustrated can be provided. For instance, an aperture similar to ambient aperture 68 can be provided in each shutter blade so as to coincide when the ambient photocell apertures 62 are coinciding. It is understood, of course, that such an aperture arrangement would be effective in controlling passage of scene radiation to the lower optical lens element 60 while the apertures 62 are directing scene radiation to the upper lens element 58. If need be, aperture arrangements can be provided so as to modify exposure each time one of the coinciding pairs of photocell apertures 62 to 66 is effective for controlling passage of scene radiation to the photodetector 42 through the lens assembly 44.

Clearly, the proportion of spectral frequencies integrated simultaneously can be regulated for suitably altering the photoresponse of the exposure control system 12. It has been determined that the ambient photocell aperture 68 can contribute a significant portion of the total scene radiation integrated when the strobe photocell apertures are effective. For purposes of illustration, acceptable exposures in photographs were obtained when the visible light contributed as much as 50 percent of the total scene radiation integrated when the strobe photocell apertures 64 were effective in causing the photodetector to be responsive to infrared frequencies. A preferred proportion or total visible to infrared scene radiation simultaneously integrated can be in the order of about 25 percent visible to 75 percent infrared.

Reference is made to Figure 6 for showing another preferred embodiment of this invention. As depicted, the photocell apertures 62', 64' and 66' on each of the blades 26', 28' are provided with spectral filters 72, 74 and 76; respectively.

The apertures 62', 64', 66' function as described in the previous embodiment for directing scene radiation along respective paths to the photodetector.

The spectral filters 72 and 76 can be similar in terms of spectral characteristics to those of the upper optical element 58. Similarly, the spectral filter 74 can be like the lower optical element 60 in terms of spectral characteristics.

Simultaneous evaluation of different spectral frequencies is achieved in this embodiment by control apertures 72a, 74a and 76a, formed respectively in the spectral filters 72, 74 and 76. Thus, whenever one of the pairs of apertures 72a, 74a and 76a coincide and overlap over the photodetector 42, they create an additional or second path of scene radiation which passes a second set of spectral characteristics different from the spectral characteristics reaching the photodetector from the surrounding overlapping spectral filters. Of course, the areas defined by each aperture, 72a, 74a and 76a could be comprised of by spectral filters themselves having spectral characteristics other than the type surrounding such areas. In this regard, the area surrounding such an arrangement need not have spectral filters.

Obviously in this embodiment, the lens assembly (not shown) would only function to direct scene light to the photodetector 42 since there is no need for the lens assembly performing any spectral filtering.

In another preferred embodiment, the lower lens element 60 could be manufactured so that its spectral characteristics are such that it would pass preselected proportions of visible spectral to infrared frequencies for those scenes where flash would be fired and the photocell apertures 64 would be effective for passing scene radiation thereto. For example, it has been determined that acceptable exposures are obtainable when the proportion of visible light integrated is about 50 percent of the total integrated scene radiation including the infrared radiation when the strobe apertures are controlling passage of scene radiation. It will be appreciated that the higher the proportion of infrared integrated, as opposed to visible light integrated, the better the exposure for scenes in which the flash is fired. In this regard, if the lens element 60 were constructed to permit 75 per cent of the total integrated scene radiation to be contributed by infrared frequencies and 25 percent to visible frequencies when the strobe apertures 60 are controlled, then the advantages of using substantially all infrared frequencies in scenes controlled by strobe firing are not severely compromised and the additional advantage of accommodating scenes having a high amount of infrared during strobe firing can be obtained. Of course, the foregoing proportions can be fixed depending upon the exposure control desired. It will be understood that the proportion of visible frequencies integrated or evaluated will be significant, in other words, more than negligible. Thus, the term significant as used throughout the specification and claims means more than a negligible amount. In one embodiment, as indicated, evaluation of up to about 7 percent of the total scene radiation integrated when the blocking visible filter was controlling is considered negligible.

**0 049 973**

Claims

1. Photographic apparatus for use in ambient and artificial scene illumination, comprising an exposure control device including: a shutter mechanism (26, 28) including a blade member movable to open and close an exposure aperture (18) and to define an exposure interval; radiation-responsive means for generating a shutter control signal as a function of radiation from the scene, including evaluating means (58, 62, 60, 64, Figure 1; 72, 74, 76, Figure 6) for substantially attenuating the passage of infrared and passing visible frequencies to a radiation-responsive element (42) in ambient illumination and for passing infrared frequencies to the radiation-responsive element in an artificial illumination; and means (52) responsive to the control signal for moving the blade member to close the exposure aperture and terminate the exposure interval, characterized in that the evaluating means includes means (68, Figure 1; 74a, Figure 6) operating when artificial scene illumination is required to pass a reduced amount of visible frequencies which, together with the infrared frequencies, impinge on the radiation-responsive element (42) during the artificial illumination.

2. Photographic apparatus in accordance with claim 1, wherein the evaluating means includes means (62, 64, 68) movable relative to the radiation-responsive means and operable, prior to the closure of the exposure aperture in response to the control signal, to cause different radiation frequencies to pass to the radiation responsive means in accordance with the extent of movement of the said movable means.

3. Photographic apparatus in accordance with claim 2, characterized in that the movable means comprises first (62) and second (64, 68) aperture means mounted for simultaneous movement with the blade member, the first aperture means co-operating with a first filter means (58) to block infrared and to pass visible frequencies during a portion of the exposure interval to control radiation impinging on the radiation-responsive element (42) in ambient illumination, and the second aperture means (64, 68) co-operating with a second filter means (60, 58) to pass infrared frequencies and reduced amounts of visible frequencies to the radiation-responsive element during a subsequent portion of the exposure interval which is reached only if artificial illumination is required.

4. Photographic apparatus in accordance with claim 3, wherein the second filter means (60) passes visible frequencies and infrared frequencies in a preselected ratio to the radiation-sensitive means.

5. Photographic apparatus in accordance with claim 2, characterized in that the movable means comprises first (62') and second (64') aperture means mounted for simultaneous movement with the blade member, the first aperture means (62') comprising a first filtered aperture portion to block infrared and to pass visible frequencies during a portion of the exposure interval to control radiation impinging on the radiation responsive element (42) in ambient illumination, and the second aperture means (64') comprising a first filtered aperture portion (74) to pass infrared frequencies and a second aperture portion (74a) which passes reduced amounts of visible frequencies to the radiation-responsive element during a subsequent portion of the exposure interval.

6. Photographic apparatus according to any one of claims 1 to 5, in which the shutter mechanism comprises a pair of aperture blades (26, 28) for controlling transmission of scene radiation, the blades being movable together to define an aperture for the passage of scene radiation to the focal plane during movement of the blades from one position to another, the shutter blades further defining, during their passage between the two positions, apertures (62, 64, 66, 68) for the passage of infrared and visible spectral frequencies from the scene to the radiation-sensitive means (42).

7. Apparatus according to claim 1, wherein the evaluating means includes a first light-responsive region to which only infrared frequencies may be transmitted, a second light-responsive region to which only visible frequencies may be transmitted, and means for simultaneously directing an amount of scene light to the said first region for infrared evaluation and a reduced amount of scene light to the said second region for visible light evaluation during a portion of the exposure interval corresponding to the use of artificial illumination.

8. Apparatus in accordance with any one of the preceding claims wherein the extent of visible light blocking during the transmission of infrared frequencies in the portion of the exposure interval in which artificial illumination makes a substantial contribution to the exposure, is from 50% to 90% of the total amount of radiation from the scene evaluated during the said portion of the exposure interval.

9. Apparatus in accordance with any one of the preceding claims, wherein the extent of visible light blocking the transmission of infrared frequencies in the portion of the exposure interval in which illumination makes a substantial contribution to the exposure, is approximately 75% of the total amount of radiation from the scene evaluated during the said portion of the exposure interval.

10. Photographic apparatus in accordance with claim 1, wherein the visible spectral frequencies and the infrared frequencies pass to the radiation-responsive element along different first and second paths.

**Patentansprüche**

1. Fotografischer Apparat zur Benutzung bei Tageslicht- und Kunstlichtbeleuchtung mit einer Belichtungssteuereinrichtung, welche folgende Teile umfaßt: einen Verschlußmechanismus (26, 28) mit einer Lamelle, die eine Belichtungsöffnung (18) öffnet und schließt und ein Belichtungsintervall definiert; eine auf Strahlung ansprechende Vorrichtung zur Erzeugung eines Verschlußsteuersignals als Funktion der von der Aufnahmeszene ausgehenden Strahlung, mit einer Abschätzvorrichtung (58, 62, 60, 64, Fig. 1; 72, 74, 76, Fig. 6) durch die der Durchtritt von Infrarotstrahlung nach dem auf Strahlung ansprechenden Element (42) beträchtlich angeschwächt, sichtbare Frequenzen jedoch durchgelassen werden, wenn unter Tageslichtbedingungen belichtet wird, und durch die Infrarotfrequenzen bei künstlicher Beleuchtung auf das auf Strahlung ansprechende Element geleitet werden; und Mittel (52), die auf das Steuersignal ansprechen, um die Verschlußlamelle so zu bewegen, daß die Belichtungsöffnung geschlossen und das Belichtungsintervall beendet wird, dadurch gekennzeichnet, daß die Abschätzvorrichtung Mittel (68 Fig. 1; 74a Fig. 6) aufweist, die bei künstlicher Aufnahmebeleuchtung wirksam sind, um einen verminderten Anteil sichtbarer Frequenzen zusammen mit den Infrarotfrequenzen auf dem auf Strahlung ansprechenden Element (42) während der künstlichen Beleuchtung auftreffen zu lassen.

2. Fotografischer Apparat nach Anspruch 1, bei welchem die Abschätzvorrichtung Mittel (62, 64, 68) aufweist, die relativ zu der auf Strahlung ansprechenden Vorrichtung beweglich sind und vor dem Schließen der Belichtungsöffnung gemäß dem Steuersignal wirksam werden, um unterschiedliche Strahlungsfrequenzen nach der auf Strahlung ansprechenden Vorrichtung gemäß dem Ausmaß der Bewegung dieser beweglichen Mittel gelangen zu lassen.

3. Fotografischer Apparat nach Anspruch 2, dadurch gekennzeichnet, daß die beweglichen Mittel eine erste (62) und eine zweite (64, 68) Blende aufweisen, die gleichzeitig mit der Verschlußlamelle beweglich ist, daß die erste Blende mit einem ersten Filter (58) zusammenwirkt, um Infrarot zu sperren und sichtbare Frequenzen während eines Abschnitts des Belichtungsintervalls hindurchtreten zu lassen und um die Strahlung zu steuern, die auf das strahlungsempfindliche Element (42) bei Tageslichtbetrieb auftrifft, und daß die zweite Blende (64, 68) mit einem zweiten Filter (60, 58) zusammenwirkt, um Infrarotfrequenzen und verringerte Anteile sichtbarer Frequenzen nach dem strahlungsempfindlichen Element hindurchtreten zu lassen, während ein folgender Abschnitt des Belichtungsintervalls stattfindet, der aber nur dann erreicht wird, wenn künstliche Beleuchtung erforderlich ist.

4. Fotografischer Apparat nach Anspruch 3, bei dem das zweite Filter (60) sichtbare Frequenzen und Infrarotfrequenzen in einem vorbestimmten Verhältnis nach der auf Strahlung ansprechenden Vorrichtung gelangen läßt.

5. Fotografischer Apparat nach Anspruch 2, dadurch gekennzeichnet, daß die beweglichen Mittel eine erste (62') und zweite (64') Blende aufweisen, die sich gleichzeitig mit der Verschlußlamelle bewegen, daß die erste Blende (62') einen ersten Filterblendenabschnitt aufweist, um Infrarotstrahlung zu sperren und sichtbare Frequenzen während eines Teils des Belichtungsintervalls hindurchtreten zu lassen, um den Strahlungseinfall auf das strahlungsempfindliche Element (42) bei Tageslichtbetrieb zu steuern, und daß die zweite Blende (64') einen ersten Filterblendenabschnitt (74) zum Durchtritt infraroter Frequenzen und einen zweiten Blendenabschnitt (74a) aufweist, der abgeschwächte Anteile sichtbarer Frequenzen nach dem strahlungsempfindlichen Element während eines darauf folgenden Abschnitts des Belichtungsintervalls gelangen läßt.

6. Fotografischer Apparat nach einem der Ansprüche 1 bis 5, bei welchem der Verschlußmechanismus ein Paar Blendenlamellen (26, 28) aufweist, um den Durchtritt des Szenenlichtes zu steuern, wobei die Lamellen zusammen derart beweglich sind, daß eine Blendenöffnung für den Durchtritt des Szenenlichts nach der Brennebene während der Bewegung der Lamellen von einer Stellung in die andere definiert wird, und wobei die Verschlußlamellen außerdem während ihrem Ablauf zwischen den beiden Stellungen Blendenöffnungen (62, 64, 66, 68) definieren, durch die Infrarotstrahlung und sichtbare spektrale Frequenzen von der Aufnahmeszene nach der auf Strahlung ansprechenden Vorrichtung (42) gelangen können.

7. Apparat nach Anspruch 1, bei welchem die Abschätzvorrichtung einen ersten lichtempfindlichen Bereich, auf den nur Infrarotfrequenzen übertragen werden können, und einen zweiten lichtempfindlichen Bereich aufweist, auf den nur sichtbare Frequenzen übertragen werden können, wobei Mittel vorgesehen sind, um gleichzeitig einen Anteil von Szenenlicht nach dem ersten Bereich zur Infrarotabschätzung und einen verminderten Anteil von Szenenlicht nach dem zweiten Bereich zur Tageslichtabschätzung während eines Teils des Belichtungsintervalls gelangen zu lassen, welches der Benutzung künstlicher Beleuchtung entspricht.

8. Apparat nach einem der vorhergehenden Ansprüche, bei welchem das Ausmaß sichtbaren Lichtes, welches während der Übertragung von Infrarotfrequenzen in jenem Abschnitt des Belichtungsintervalls blockiert wird, indem die künstliche Beleuchtung einen wesentlichen Anteil an der Belichtung beiträgt, zwischen 50% und 90% der Gesamtstrahlungsmenge von der Szene beträgt, und zwar berechnet während dieses Abschnitts des Belichtungsintervalls.

9. Apparat nach einem der vorhergehenden Ansprüche, bei welchem das Ausmaß sichtbaren Lichtes, welches während der Übertragung von Infrarotfrequenzen in jenem Abschnitt des Belichtungsintervalls blockiert wird, in dem die künstliche Beleuchtung einen wesentlichen Anteil an der Belichtung beiträgt, etwa 75% der Gesamtstrahlungsmenge von der Szene beträgt, und zwar berechnet während dieses Abschnitts des Belichtungsintervalls.

10. Fotografischer Apparat nach Anspruch 1, bei welchem die sichtbaren spektralen Frequenzen und die Infrarotfrequenzen nach dem strahlungsempfindlichen Element entlang unterschiedlicher erster und zweiter Pfade gelangen.

**Revendications**

1. Appareil photographique utilisable avec un éclairage naturel et artificiel du sujet, comportant un dispositif de contrôle de la lumination qui comprend: un mécanisme obturateur (26, 28) comportant un organe à lamelles mobiles pour ouvrir et fermer une ouverture (18) de lumination et pour définir un intervalle de lumination; un dispositif sensible aux rayonnements pour produire un signal de commande de l'obturateur en fonction du rayonnement émis par le sujet, comportant un dispositif évaluateur (58, 62, 60, 64, Fig. 1; 72, 74, 76, Fig. 6) pour atténuer fortement le passage des infrarouges et laisser passer les fréquences visibles vers un organe (42) sensible aux rayonnements en lumière ambiante et pour laisser passer les fréquences infrarouges vers l'organe sensible aux rayonnements en lumière artificielle; et un dispositif (52) réagissant au signal de commande pour actionner l'organe à lamelle afin de fermer l'ouverture de lumination et interrompre l'intervalle de lumination, caractérisé en ce que le dispositif évaluateur comporte un dispositif (68, Fig. 1; 74a, Fig. 6) intervenant lorsqu'un éclairage artificiel du sujet est nécessaire pour laisser passer une quantité réduite de fréquences visibles qui, avec les fréquences infrarouges, frappent l'organe (42) réagissant aux rayonnements pendant l'éclairage artificiel.

2. Appareil photographique selon la revendication 1, dans lequel le dispositif évaluateur comporte un dispositif (62, 64, 68) mobile par rapport au dispositif réagissant aux rayonnements, et capable de fonctionner, avant la fermeture de l'ouverture de lumination en réponse au signal de commande afin de faire passer les différentes fréquences de rayonnement vers le dispositif réagissant aux rayonnements conformément à l'ampleur du mouvement du dispositif mobile.

3. Appareil photographique selon la revendication 2, caractérisé en ce que le dispositif mobile comprend un premier (62) et des seconds (64, 68) dispositifs à ouvertures montés de manière à se déplacer en même temps que l'organe à lamelles, le premier dispositif à ouvertures coopérant avec un premier dispositif de filtrage (58) pour bloquer les infrarouges et laisser passer les fréquences visibles pendant une partie de l'intervalle de lumination pour contrôler le rayonnement frappant l'organe (42) réagissant aux rayonnements en lumière ambiante, et les seconds dispositifs (64, 68) à ouvertures coopérant avec un second dispositif (60, 58) de filtrage pour laisser passer les fréquences infrarouges et des quantités réduites de fréquences visibles vers l'organe réagissant aux rayonnements pendant une partie suivante de l'intervalle de lumination qui n'est atteinte que si un éclairage artificiel est nécessaire.

4. Appareil photographique selon la revendication 3, dans lequel le second dispositif (60) de filtrage laisse passer les fréquences visibles et les fréquences infrarouges selon une proportion prédéterminée vers le dispositif sensible aux rayonnements.

5. Appareil photographique selon la revendication 2, caractérisé en ce que le dispositif mobile comporte un premier (62') et un second (64') dispositifs à ouvertures montés pour se déplacer en même temps que l'organe à lamelles, le premier dispositif à ouvertures (62') comportant une première partie à ouverture filtrée pour bloquer les infrarouges et laisser passer les fréquences visibles pendant une partie de l'intervalle de lumination afin de contrôler le rayonnement frappant l'organe (42) réagissant aux rayonnements et le second (64') dispositif à ouvertures comportant une première partie (74) à ouverture filtrée pour laisser passer les fréquences infrarouges et une deuxième partie (74a) à ouverture qui laisse passer des quantités réduites de fréquences visibles vers l'organe réagissant aux rayonnements pendant une partie suivante de l'intervalle de lumination.

6. Appareil photographique selon l'une quelconque des revendications 1 à 5, dans lequel le mécanisme obturateur comporte une paire de lamelles (26, 28) à ouvertures pour contrôler la transmission du rayonnement émis par le sujet, les lamelles se déplaçant ensemble pour définir une ouverture laissant passer le rayonnement du sujet vers le plan focal pendant le mouvement des lamelles d'une position à une autre, les lamelles d'obturateur définissant également, pendant leur passage entre les deux positions, des ouverture (62, 64, 66, 68) permettant le passage des fréquences spectrales infrarouges et visibles émises par le sujet vers le dispositif (42) sensible aux rayonnements.

7. Appareil selon la revendication 1, dans lequel le dispositif évaluateur comporte une première surface réagissant à la lumière vers laquelle seules les fréquences infrarouges peuvent être transmises, une seconde surface réagissant à la lumière vers laquelle seules les fréquences visibles peuvent être transmises, et un dispositif pour diriger simultanément une quantité de la lumière du sujet vers ladite première surface pour l'évaluation des infrarouges et une quantité réduite de la lumière du sujet vers la seconde surface pour une évaluation de la lumière visible pendant une partie de l'intervalle de lumination correspondant à l'utilisation d'un éclairage artificiel.

8. Appareil selon l'une quelconque des revendications précédentes dans lequel l'ampleur du blocage de la lumière visible au cours de la transmission des fréquences infrarouges dans la partie de l'intervalle de lumination où l'éclairage artificiel apporte une forte contribution à la lumination, est de 50 à 90 % du rayonnement total émis par le sujet évalué pendant ladite partie de l'intervalle de lumination.

9. Appareil selon l'une quelconque des revendications précédentes, dans lequel la proportion de lumière visible bloquant la transmission des fréquences infrarouges pendant la partie de l'intervalle de lumination où l'éclairage apporte une forte contribution à l'exposition à la lumination, est d'environ 75 % du rayonnement total émis par le sujet évalué pendant ladite partie de l'intervalle de lumination.

10. Appareil photographique selon la revendication 1, dans lequel les fréquences du spectre visible et les fréquences infrarouges passent vers l'organe réagissant aux rayonnements le long de différents trajets, le premier et le second.

FIG. 4

FIG. I

0049973

FIG. 2

FIG. 3

0049973

0 049 973

FIG. 5

FIG. 6

3